# DEMANDE DE BREVET EUROPEEN

(11) **EP 1 184 310 A1**
(43) Date de publication de la demande: **06.03.2002**
(21) Numéro de dépôt: 01430027.1
(22) Date de dépôt: 23.08.2001
(51) Int. Cl.: B65G 47/31, B65G 47/68, G06T 1/00, G06T 7/00

(54) **Procédé et dispositif de mise en file d'objects**

(30) Priorité: 31.08.2000 FR 0011108
(71) Demandeur: Cybernetix, 13382 Marseille Cedex 13 (FR)
(72) Inventeur: Herubel, Patrick, 13122 Ventabren (FR); Palumbo, Charles, 13290 Les Milles (FR); Pichon, Jean-Louis, 33480 Cabries (FR)
(74) Mandataire: Domange, Maxime

(57) **Abrégé**

La présente invention est relative à un procédé de mise en file d'objets et à un dispositif permettant la mise en oeuvre de ce procédé.

Selon l'invention, un dispositif de mise en file d'objets comporte une pluralité de convoyeurs (11a-11j) de transfert parallèles qui sont aptes, ensemble ou séparément, à transférer un objet (14-17) de la sortie d'un convoyeur d'entrée (3) à l'entrée d'un convoyeur de sortie (5), entre lesquels et dans le prolongement desquels les convoyeurs de transfert s'étendent, et comporte une caméra (23) d'observation des objets sur le convoyeur d'entrée, ainsi que des moyens (24) de détermination de données de contour et d'identification des objets à partir d'images saisies par la caméra, et des moyens (25, 34) pour l'actionnement sélectif des convoyeurs de transfert en fonction desdites données de contour et d'identification.

## Description

La présente invention est relative à un procédé de mise en file d'objets et à un dispositif permettant la mise en oeuvre de ce procédé.

L'invention s'applique particulièrement à l'égrenage de paquets en vrac, tels que des paquets postaux, pour former une file de paquets disposés séquentiellement (c'est à dire l'un derrière l'autre).

Il est connu, notamment par les brevets US 5,918,723 et US 5,950,800, de « singuler » (c'est à dire mettre en file) des objets à l'aide d'un dispositif essentiellement constitué de plusieurs convoyeurs s'étendant perpendiculairement les uns aux autres, qui sont généralement mus à des vitesses croissantes - de l'entrée vers la sortie du dispositif - et auxquels sont associés des rampes et/ou des déflecteurs statiques de guidage des objets.

Ces dispositifs présentent l'inconvénient de provoquer une chute des objets lors de leur transfert d'un convoyeur à un autre, qui peut occasionner une détérioration d'objets fragiles ; en outre, ces dispositifs sont généralement encombrants, du fait de la présence des déflecteurs ainsi que de la présence de convoyeurs de retour (de recyclage) qui transportent des objets séparés du flux d'objets traités par le dispositif, de l'aval de celui-ci vers l'amont ; ceci occasionne une perte d'énergie ainsi que des choc supplémentaires auxquels les objets recyclés sont soumis lorsqu'ils sont déversés, par le convoyeur de retour, à l'entrée du dispositif.

Selon le document US 5,950,800 sus-cité, le dispositif comporte un convoyeur incliné d'un angle au moins égal à 25° qui occasionne la chute des objets empilés sur d'autres objets afin que les objets délivrés en sortie de ce convoyeur s'étendent selon une seule couche.

Il est connu par ailleurs du document US 4,634,328 un dispositif de mise en file d'objets qui comporte
- deux convoyeurs - d'entrée et de sortie - pour le transport d'objets, qui sont disposés sensiblement dans le prolongement l'un de l'autre,
- une pluralité de doigts parallèles qui sont déplaçables par des actionneurs et qui s'étendent verticalement entre les deux convoyeurs pour, selon leur position, autoriser ou interdire le passage d'objets d'un convoyeur à l'autre,
- une caméra disposée de façons à filmer les objets présents sur un convoyeur d'entrée,
- des algorithme de calcul pour déterminer le profil des objets observés par la caméra,
- un robot apte à pousser sélectivement les objets, un par un, du premier au deuxième convoyeur,
- un dispositif de contrôle relié à la caméra, au robot et aux actionneurs de déplacement des doigts pour, en fonction du profil des objets, commander le déplacement des doigts afin de les amener dans une position où ils autorisent le passage d'un objet tout en interdisant le passage des autres objets, puis pour commander le robot pousseur, afin de transférer un à un, les objets du premier au deuxième convoyeur.

Un objectif de l'invention est de proposer un système d'égrenage d'objets plus simple que le dispositif décrit dans ce dernier document.

Un objectif de l'invention est de proposer un système de mise en file d'objets qui remédie, en partie au moins, aux inconvénients des procédés et dispositifs connus.

Selon un premier aspect, l'invention consiste à proposer un dispositif qui comporte une pluralité de convoyeurs de transfert parallèles qui sont aptes, ensemble ou séparément, à transférer un objet de la sortie d'un convoyeur d'entrée à l'entrée d'un convoyeur de sortie, entre lesquels et dans le prolongement desquels les convoyeurs de transfert s'étendent, et qui comporte une caméra d'observation des objets sur le convoyeur d'entrée, ainsi que des moyens de détermination de données de contour et d'identification des objets à partir d'images saisies par la caméra, ainsi que des moyens pour l'actionnement sélectif des convoyeurs de transfert en fonction desdites données de contour et d'identification.

En d'autres termes, l'invention consiste à utiliser un convoyeur « multi-bandes » intercalé entre un convoyeur d'entrée et un convoyeur de sortie, qui comporte une pluralité de bandes s'étendant parallèlement et côte à côte, et formant chacune un convoyeur de transfert; chaque bande est apte à être mue individuellement, sous la commande d'une unité électronique de commande, en fonction de données résultant de l'identification d'un contour d'un objet individualisé, lequel contour est obtenu par traitement d'une (ou plusieurs) images prises par une caméra d'observation des objets présents sur le convoyeur d'entrée ; le transfert sélectif d'un objet individualisé choisi parmi une pluralité d'objets présentés de front, par le convoyeur d'entrée, à l'entrée du convoyeur multi-bandes, est obtenu en actionnant différemment les bandes se trouvant dans le prolongement dudit objet individualisé, par référence aux bandes ne se trouvant pas dans le prolongement dudit objet individualisé ; cet actionnement « différentiel » des différentes bandes parallèles du convoyeur multi-bandes peut fondamentalement être effectué de deux manières différentes :
- soit en actionnant lesdites bandes se trouvant dans le prolongement de l'objet individualisé choisi, tout en maintenant les autres bandes à l'arrêt (fonctionnement en « tout ou rien »),
- soit en actionnant lesdites bandes se trouvant dans le prolongement de l'objet individualisé choisi selon une première vitesse de transfert, tout en actionnant d'autres bandes selon au moins une deuxième vitesse de transfert dont la valeur est différente de - en particulier inférieure à - celle de ladite première vitesse de transfert.

Ces deux modes d'actionnement peuvent être combinés entre eux.

Grâce à ce système, lorsqu'une pluralité d'objets sont présentés côte à côte (de front) en sortie du convoyeur d'entrée, ledit objet individualisé choisi parmi cette pluralité est détaché (séparé) de ladite pluralité d'objets, lors de son transfert par le convoyeur multi-bandes jusqu'au convoyeur de sortie, de sorte qu'il est présenté en entrée du convoyeur de sortie, en avant des autres objets de ladite pluralité ; un deuxième objet de ladite pluralité est ensuite choisi et la commande de mouvements différentiels des bandes est alors adaptée à la position et au contour de ce deuxième objet choisi, qui sont déterminés à partir de l'image du profil transversal du groupe d'objets restant sur ledit premier convoyeur, ce qui permet de la même façon que pour le premier objet choisi, de séparer le deuxième objet de la pluralité d'objets présents sur le convoyeur d'entrée.

Ces opérations étant répétées autant de fois que le nombre d'objets individualisés présentés en entrée du convoyeur multi-bandes, on obtient une séparation (longitudinale) des objets qui sont présentés l'un après l'autre sur le convoyeur de sortie par le convoyeur de transfert multi-bandes ; on peut alors le cas échéant les disposer en file (l'un dernière l'autre) en utilisant par exemple un déflecteur vertical s'étendant dans un plan légèrement incliné par rapport à un plan longitudinal vertical du convoyeur de sortie.

Ainsi, selon un autre aspect, l'invention consiste en un procédé de séparation d'un groupe d'objets en vrac se présentant de front sur un convoyeur d'entrée, dans lequel :
- on enregistre une image du groupe d'objets,
- on détermine par calcul à partir de l'image, le nombre d'objets du groupe et le contour de chaque objet, ce qui permet de déterminer dans un plan vertical transversal la position et la largeur de la base de chacun des objets,
- on commande l'avancée hétérogène (hétérocinétique et/ou décalée dans le temps) des bandes ou groupes de bandes parallèles d'un convoyeur multi-bandes (prolongeant ledit convoyeur d'entrée) qui correspondent respectivement à chacun des objets individualisés, de sorte que les objets du groupe d'objets sont présentés, en sortie du convoyeur multi-bandes, avec un décalage longitudinal entre chaque objet d'une paire d'objets successifs.

De préférence, on maintient la vitesse moyenne de transport des objets à une valeur située dans une plage allant de 0,1 mètre par seconde à 2 mètres par seconde.

Le procédé et le dispositif selon l'invention permettent d'éviter la chute et le recyclage des objets.

Le système selon l'invention remplace avantageusement le système décrit dans le brevet US 4,634,328 ; en effet dans le dispositif selon l'invention, il importe peu qu'un objet à trier présente une répartition spatiale de densité hétérogène - comme c'est le cas de nombreux objets emballés -, ou non : le transport d'un objet hétérogène par plusieurs bandes adjacentes d'un convoyeur multi-bandes, sur lesquelles l'objet repose, permet d'assurer un transfert de l'objet selon un mouvement de translation rectiligne selon l'axe longitudinal du convoyeur multi-bandes ; un tel mouvement n'est généralement pas susceptible d'occasionner un appui de l'objet transféré sur les objets adjacents du groupe, lequel appui serait susceptible de provoquer une rotation (et/ou une translation transversale) de l'objet (ou des objets) en appui.

A l'inverse, le robot pousseur du brevet suscité, outre sa complexité structurelle et de commande, est naturellement confronté à des difficultés pour contrôler la trajectoire d'un objet qu'il pousse : il n'est possible de déduire de l'image d'un objet hétérogène, ni la position de son centre de gravité, ni les caractéristiques (module et direction) de la résultante des forces de frottement qui s'opposent à son glissement sur l'organe (bande d'un convoyeur) qui supporte l'objet ; par conséquent l'effort de poussée du robot tend à provoquer une rotation et/ou un basculement de l'objet qui est donc susceptible d'interférer (heurter) les doigts intercalés entre les deux convoyeurs, dans le dispositif décrit dans le brevet US 4,634,328 ; en outre la trajectoire de l'objet poussé par le robot est modifiée par les efforts de réaction résultant de l'appui de l'objet poussé sur les doigts et/ou sur les autres objets qui l'entourent.

Par ailleurs, l'utilisation du convoyeur multi-bandes facilite le transfert d'objets déformables (tels que des journaux) et le transfert d'objets susceptibles de rouler, en particulier des objets de forme approximativement cylindrique ou sphérique, en leur assurant une trajectoire de transfert déterminée et contrôlée, selon une translation longitudinale, sans rotation de l'objet, contrairement au robot pousseur.

D'autres caractéristiques et avantages de l'invention apparaissent dans la description suivante qui se réfère aux dessins annexés, qui illustrent sans aucun caractère limitatif des modes préférentiels de réalisation de l'invention.

La figure 1 illustre en vue en perspective simplifiée les principaux composants mécaniques de transfert d'un dispositif selon l'invention.

La figure 2 illustre en vue de coté schématique les principaux composants d'un dispositif selon l'invention et leur interconnexion.

La figure 3 illustre en vue en coupe dans un plan vertical transversal, un convoyeur multi-bandes utilisé pour décaler longitudinalement des objets présentés de front en sortie du convoyeur d'entrée d'un dispositif selon l'invention.

La figure 4 illustre à échelle agrandie le détail repéré IV de la figure 3.

La figure 5 illustre schématiquement en vue de côté un deuxième mode de réalisation d'un convoyeur multi-bandes selon l'invention.

La figure 6 illustre en vue de dessus schématique partielle le convoyeur de la figure 5.

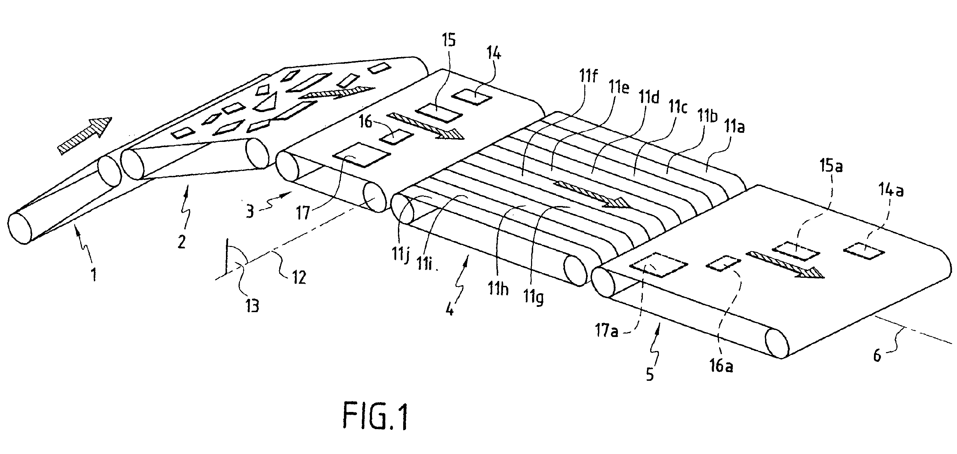

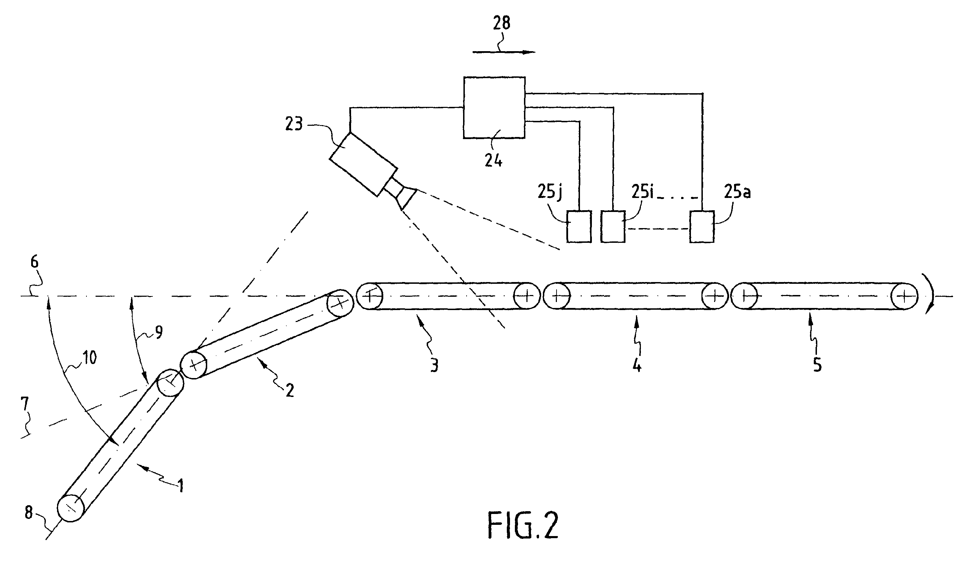

Par référence aux figures 1 et 2, le dispositif selon l'invention comporte cinq convoyeurs disposés sensiblement juxtaposés deux à deux successivement :
- un convoyeur à bande 1 dont l'axe longitudinal 8 est incliné d'un angle 10 par rapport à un axe horizontal 6, dont la valeur est de l'ordre de 30° ; ce convoyeur provoque l'étalement en une couche des objets qu'il transporte, du fait de l'inclinaison de son axe longitudinal ;
- un convoyeur à bande 2 dont l'axe longitudinal 7 est incliné d'un angle 9 par rapport à un axe horizontal 6, dont la valeur est de l'ordre de 25° ; ce convoyeur est actionné (par un moteur non représenté) à une vitesse dont la valeur est voisine du double de celle du convoyeur 1, de sorte que l'espacement longitudinal des objets entre eux est augmenté lors du transfert des objets du convoyeur 1 au convoyeur 2 ; il en résulte un "étalement" de la couche d'objets transportés ;
- un convoyeur 3 à bande - dit convoyeur d'entrée - qui reçoit en entrée les objets sortant du convoyeur 2 en basculant, et qui s'étend selon l'axe 6 ;
- un convoyeur 4 qui comporte dix bandes étroites 11a à 11j juxtaposées bord à bord et s'étendant parallèlement à l'axe 6 ; ce convoyeur multi-bandes 4 sert à transférer les objets présentés en sortie du convoyeur d'entrée 3, jusqu'à l'entrée d'un convoyeur de sortie 5, en les décalant longitudinalement les uns par rapport aux autres, du fait des vitesses relatives qui sont imparties aux bandes 11a-11j en fonction de données extraites d'une image transversale des objets présents sur le convoyeur 3;
- un convoyeur 5 à bande - dit convoyeur de sortie - qui s'étend également selon l'axe 6.

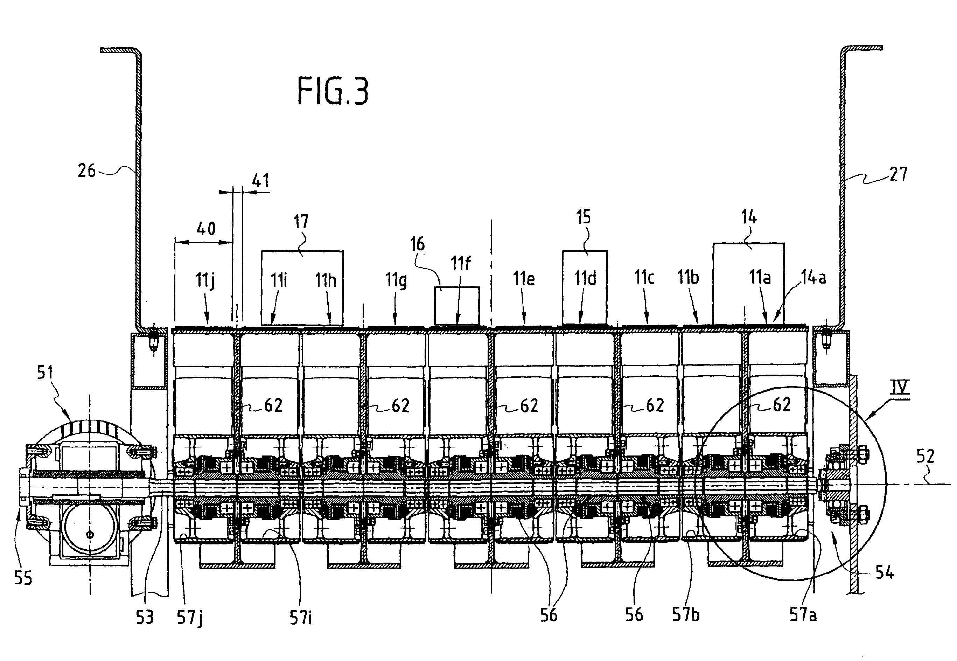

Le dispositif comporte, outre des supports et guides statiques tels que ceux repérés 26 et 27 figure 3, une unité électronique 24 pour la commande sélective des actionneurs 25a à 25j respectivement associés à chacune des bandes 11a à 11j du convoyeur multi-bandes 4 ; pour ce faire, l'unité 24 est connectée aux actionneurs 25a-25j, mais aussi à une caméra 23 délivrant à l'unité 24 des images, dans un plan 13 vertical transversal, des objets (14 à 17 figure 1) - ou de leur ombre portée - qui se présentent de front en sortie du convoyeur 3.

L'unité 24 est munie (ou associée à) de(s) moyens de détermination de la position, le long d'un axe transversal tel que 12, et de la largeur de chacun des objets 14 à 17 ; ces moyens comportent des algorithmes connus de traitement d'images, en particulier un algorithme d'extraction de contour, et un programme d'isolement et/ou de reconnaissance de forme des objets filmés par la caméra.

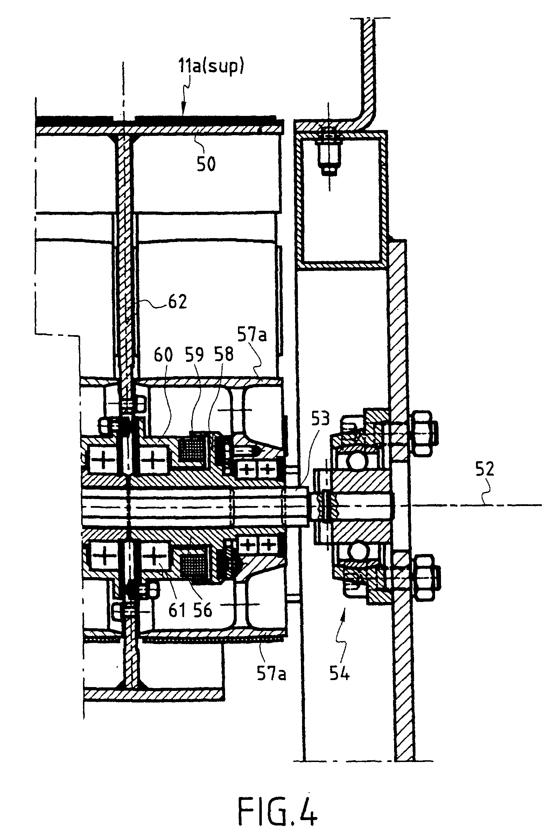

Le premier exemple de réalisation du convoyeur multi-bandes illustré figures 3 et 4 est particulièrement destiné à provoquer, sous le contrôle de l'unité 24, l'entraînement sélectif des bandes 11a à 11j, en mode "tout ou rien" selon la séquence suivante :
- entraînement des deux bandes adjacentes 11a, 11b s'étendant dans le prolongement de la base 14₁ de l'objet 14, à une vitesse 28, jusqu'à détection du passage de l'objet 14 sur le convoyeur suivant (repère 5), les autres bandes 11c à 11j étant maintenues à l'arrêt, puis :
- entraînement de la bande 11d pour le transfert de l'objet 15, à la vitesse 28, les bandes 11a et 11b étant toujours entraînées tandis que les bandes 11c, 11e à 11j restent à l'arrêt ; puis, après le passage de l'objet 15 sur le convoyeur suivant (repère 5):
- entraînement de la bande 11f pour le transfert de l'objet 16, à la vitesse 28, les bandes 11a, 11b, 11d étant maintenues entraînées tandis que les bandes 11c, 11e, 11g à 11j restent à l'arrêt ; puis, après le passage de l'objet 16 sur le convoyeur suivant (repère 5) :
- entraînement des bandes 11h et 11i pour le transfert de l'objet 17, les bandes 11a, 11b, 11d, 11f étant maintenues entraînées et les bandes 11c, 11e, 11g et 11j étant maintenues à l'arrêt, jusqu'au passage de l'objet 17 sur le convoyeur 5.

Lorsque les quatre objets ont ainsi été tranférés par le convoyeur 4 à l'entrée du convoyeur 5, ils reposent sur ce dernier avec un décalage longitudinal tel qu'illustré pour les objets 14a à 17a, figure 1.

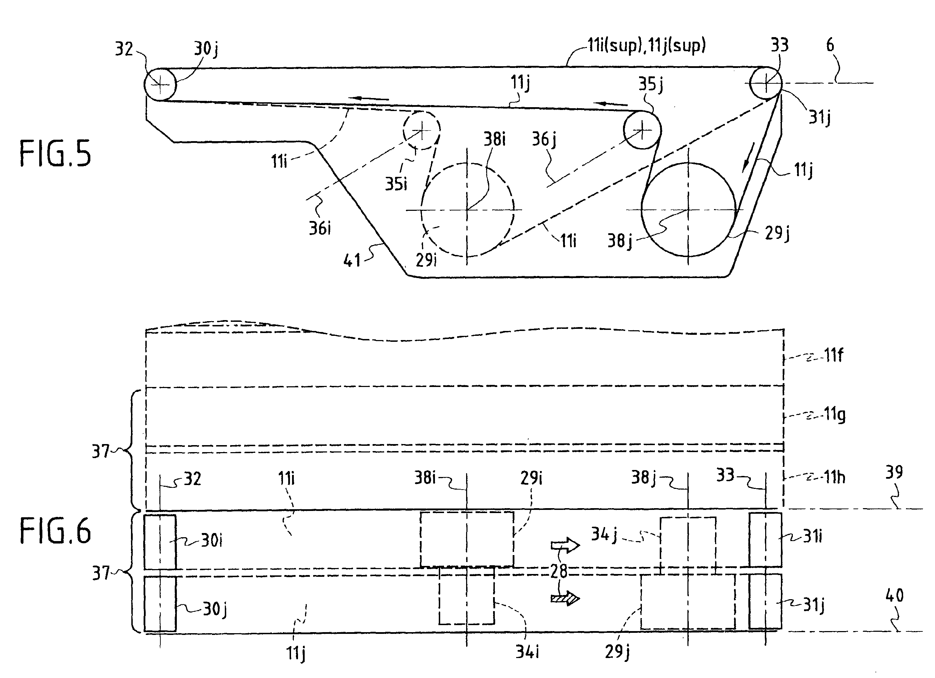

Dans ce mode de réalisation, les bandes 11a à 11j étant mues par un moteur commun - par l'intermédiaire d'embrayages respectifs comme décrit ci-après - leurs vitesses 28 de déplacement sont égales ; dans la variante illustrée figures 5-6, les bandes peuvent être mues à des vitesses 28 différentes, un moteur 34 d'entraînement (tel que 34i, 34j) étant respectivement associé à chacune des bandes (telles que 11i, 11j), et actionné sous le contrôle de l'unité 24 figure 2.

Dans les deux modes de réalisation, chaque bande étroite telle que 11j est guidée par quatre roues (ou poulies) :
- deux roues 30j, 31j montées folles en rotation selon deux axes transversaux 32, 33 parallèles à l'axe 12 (figure 1), entre lesquelles le brin supérieur 11 isup, 11jsup des bandes 11i, 11j est tendu de sorte que ces brins sont coplanaires et s'étendent dans le prolongement des brins supérieurs respectifs des bandes du convoyeur d'entrée 3 et du convoyeur de sortie 5 ;
- une roue folle (telle que 35i, 35j) de guidage du brin inférieur de la bande, qui, étant montée mobile en translation selon un axe (tel que 36i, 36j) et soumise à l'action d'un ressort de rappel, permet de maintenir la bande tendue,
- une roue motrice (telle que 29i, 29j) respectivement mue par ledit moteur (tel que 34i, 34j) pour l'entraînement de la bande par friction.

Comme illustré figures 5, 6, le convoyeur comporte plusieurs modules 37 identiques juxtaposés côte-à-côte et comportant chacun :
- deux bandes étroites adjacentes telles que 11i et 11j et lesdites quatre roues associées à chaque bande,
- deux moteurs tels que 34i, 34j d'entraînement direct des roues motrices 29i, 29j, dont les axes respectifs de rotation 38i, 38j sont parallèles et décalés - dans le plan des figures 5 et 6 - de sorte qu'ils s'inscrivent dans l'espace délimité par deux plans verticaux longitudinaux dont la trace respective dans le plan de la figure 6 est repérée par 39 et 40, ce qui permet, comme illustré figure 6, d'accoler au moins deux modules 37 pour former un convoyeur compact ayant un nombre pair (au moins égal à 4) de bandes ;
- un carter 41 ouvert en partie supérieure qui protège les mécanismes situés sous les brins supérieurs des bandes.

Il en résulte une structure modulaire compacte et économique.

De préférence, les bandes 11a-11j du convoyeur multi-bandes sont séparées transversalement par un espace dont la largeur 40 est telle que son rapport à la largeur 41 des bandes est situé dans une plage allant de 0,07 à 0,3.

De préférence également, le rapport de la largeur 41 des bandes 11a-11j à la longueur de leur brin supérieur est situé dans une plage allant de 5 à 25.

Par référence aux figures 3 et 4, le dispositif comporte une tôle horizontale fixe 50, sur la face supérieure de laquelle peuvent glisser les brins supérieurs des bandes du convoyeur multi-bandes.

Un moteur 51 commun aux dix bandes est fixé à un support non représenté et entraîne en rotation, par l'intermédiaire d'un réducteur 55, selon l'axe 52 transversal horizontal, un arbre 53 cannelé s'étendant selon l'axe 52 et monté rotatif dans un palier 54 d'extrémité.

L'arbre cannelé porte dix roues 56 montées tête-bêche deux à deux le long de l'arbre ; chaque roue 56 comporte un disque 58 de friction, d'axe 52, susceptible de se "coller" à une surface d'adhérence équipant une roue 57a...57j d'entraînement respectif des bandes 11a...11j ; le déplacement - de faible amplitude - selon un mouvement de translation selon l'axe 52, de chaque roue 56, pour permettre le contact et l'entraînement par friction d'une roue telle que 57a par le disque d'embrayage 58 de la roue 56, est obtenu par action d'une bobine 59 commandée par l'unité 24 figure 2 pour provoquer sur le disque un effort résultant du champ électromagnétique de la bobine ; la bobine est fixée à une douille 60 recevant un roulement 61 formant un palier pour la roue 56 ; la douille est montée fixe, étant fixée sous la tôle 50 par un support 62 ; un autre roulement 62 autorise la libre rotation de la roue 56, 58 entraînée en permanence par l'arbre 53, lorsque l'entraînement de la roue 57 n'est pas provoqué par l'embrayage électromagnétique 58-59.

## Revendications

1. Dispositif de mise en file d'objets, **caractérisé en ce qu'**il comporte une pluralité de convoyeurs (11a-11j) de transfert parallèles qui sont aptes, ensemble ou séparément, à transférer un objet (14-17) de la sortie d'un convoyeur d'entrée (3) à l'entrée d'un convoyeur de sortie (5), entre lesquels et dans le prolongement desquels les convoyeurs de transfert s'étendent, et qui comporte une caméra (23) d'observation des objets sur le convoyeur d'entrée, ainsi que des moyens (24) de détermination de données de contour et d'identification des objets à partir d'images saisies par la caméra, et des moyens (25, 34) pour l'actionnement sélectif des convoyeurs de transfert en fonction desdites données de contour et d'identification.

2. Dispositif de transport et d'égrenage d'objets, **caractérisé en ce qu'**il comporte un convoyeur (4) multi-bandes comportant une pluralité de bandes (11a-11j) s'étendant parallèlement et côte à côte, et formant chacune un convoyeur de transfert, chaque bande étant apte à être mue individuellement, sous la commande d'une unité électronique (24) de commande, en fonction de données résultant de l'identification d'un contour d'un objet individualisé, lequel contour est obtenu par traitement d'une (ou plusieurs) images prises par une caméra (23) d'observation des objets (14-17) présentés de front à l'entrée du convoyeur multi-bandes, le transfert sélectif d'un objet individualisé choisi parmi une pluralité d'objets étant obtenu en actionnant différemment les bandes se trouvant dans le prolongement dudit objet individualisé, par référence aux bandes ne se trouvant pas dans le prolongement dudit objet individualisé.

3. Dispositif selon l'une quelconque des revendications 1 ou 2, qui comporte au moins quatre bandes (11a-11j) étroites et de même longueur, dont les brins supérieurs sont coplanaires.

4. Dispositif selon la revendication 3, qui comporte un moteur (34) associé à chaque bande (11a-11j) pour son entraînement par friction par l'intermédiaire d'une poulie (29).

5. Dispositif selon la revendication 3, qui comporte un embrayage (25, 58, 59) à commande électromagnétique associé à chaque bande (11a-11j) pour permettre l'entraînement sélectif de la bande par un moteur (51) commun à plusieurs bandes.

6. Dispositif selon l'une quelconque des revendications 1 à 5, qui comporte deux convoyeurs à bande (1, 2) s'étendant successivement en amont du convoyeur multi-bandes, qui sont inclinés et commandés pour provoquer l'étalement des objets en une couche et leur espacement longitudinal.

7. Dispositif selon l'une quelconque des revendications 1 à 6, dans lequel les bandes (11a-11j) du convoyeur multi-bandes sont séparées transversalement par un espace dont la largeur (40) est telle que son rapport à la largeur (41) des bandes est situé dans une plage allant de 0,07 à 0,3.

8. Dispositif selon l'une quelconque des revendications 1 à 7, dans lequel le rapport de la largeur (41) des bandes (11a-11j) à la longueur de leur brin supérieur est situé dans une plage allant de 5 à 25.

9. Procédé de séparation d'un groupe d'objets (14-17) en vrac se présentant de front sur un convoyeur d'entrée (3), dans lequel :
- on enregistre une image du groupe d'objets,
- on détermine par calcul à partir de l'image, le nombre d'objets du groupe et le contour de chaque objet, ce qui permet de déterminer dans un plan vertical transversal (13) la position et la largeur de la base de chacun des objets,
- on commande l'avancée hétérogène (hétérocinétique et/ou décalée dans le temps) des bandes (11a-11j) ou groupes de bandes parallèles d'un convoyeur multi-bandes (4) prolongeant ledit convoyeur d'entrée qui correspondent respectivement à chacun des objets individualisés, de sorte que les objets du groupe d'objets sont présentés, en sortie du convoyeur multi-bandes, avec un décalage longitudinal entre les objets d'une paire d'objets successifs.

10. Procédé selon la revendication 9, dans lequel on maintient la vitesse moyenne (28) de transport des objets à une valeur située dans une plage allant de 0,1 mètre par seconde à 2 mètres par seconde.

11. Procédé selon la revendication 10, dans lequel on actionne les bandes (11a-11j) du convoyeur multi-bandes à des vitesses différentes.
